# EUROPEAN PATENT SPECIFICATION

(11) **EP 2 362 708 B1**
(45) Date of publication and mention of the grant of the patent: **19.09.2012**
(21) Application number: 10305151.2
(22) Date of filing: 15.02.2010
(51) Int. Cl.: H04W 74/08, H04W 84/04

(54) **Method for performing a random access procedure by a relay node in a wireless or radio communication network, corresponding relay node**
Verfahren zur Durchführung einer Direktzugriffsprozedur durch einen Relaisknoten in einem Drahtlos- oder Funkkommunikationsnetzwerk, zugehöriger Relaisknoten
Procédé de réalisation d'une procédure d'accès aléatoire par un noeud relais dans un réseau de communication radio ou sans fil, noeud relais correspondants

(43) Date of publication of application: 31.08.2011
(73) Proprietor: Alcatel Lucent, 75007 Paris (FR)
(72) Inventor: Worral, Chandrika, Newbury, Berkshire RG14 6SN (GB); Lim, Seau Sian, Swindon, Wiltshire SN1, 1HF (GB); Palat, Sudeep, Swindon, Wiltshire SN5 6EE (GB)
(74) Representative: Wetzel, Emmanuelle

(56) References cited:
- EP-A1- 2 053 872
- US-A1- 2010 035 620
- "3rd Generation Partnership Project; Technical Specification Group Radio Access Network; Feasibility study for Further Advancements for E-UTRA (LTE-Advanced) (Release 9)" 3GPP STANDARD; 3GPP TR 36.912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 1 September 2009 (2009-09-01), pages 1-55, XP050377800
- TEXAS INSTRUMENTS: "On the design of relay node for LTE-advanced" 3GPP DRAFT; R1-090593, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318480 [retrieved on 2009-02-03]

## Description

### BACKGROUND OF THE INVENTION

The present invention relates to the field of telecommunication, and more specifically to a method for performing a random access procedure by a relay node in a wireless or radio communication network.

Relay-based wireless or radio communication network are gaining in interest thanks to the possibility of reaching enhanced coverage while keeping the energy required in addition in range. More precisely, coverage of high data rates, group mobility, temporary network deployment cell edge throughput and/or coverage in new areas are subjects which can be greatly improved by introducing relays in conventional wireless/radio communication networks.

Such relays based wireless or radio communication networks are especially being investigated in the framework of 3GPP LTE (Long Term Evolution) or IEEE 802.16ᵢ/m standardization initiatives.

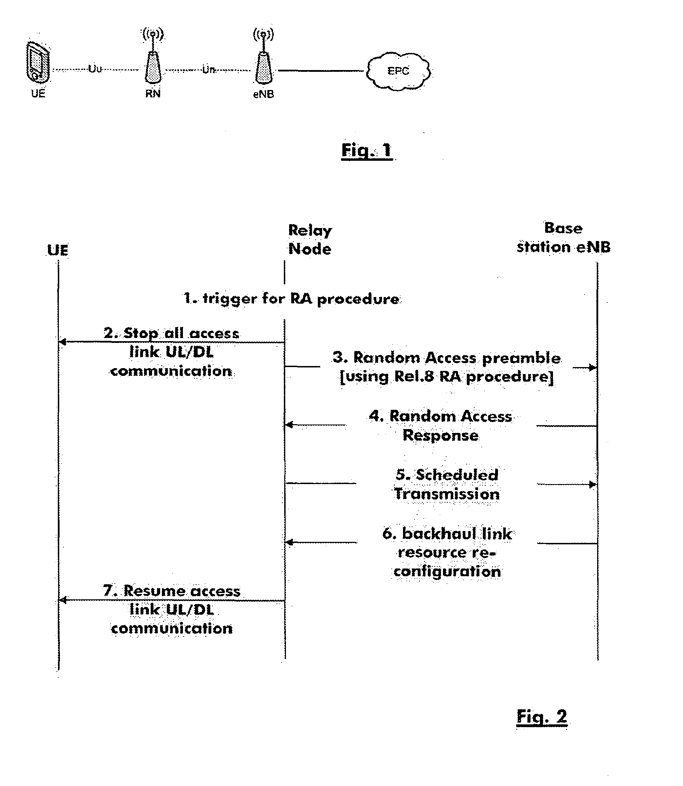

Figure 1 is showing the general architecture of relay-based wireless/radio communication networks where a user equipment UE no more communicates directly with a base station eNB but where a relay node RN is included in the path between user equipment UE and base station eNB. Consequently, relay node RN is wirelessly connected to base station eNB also called donor cell or donor eNB over a backhaul link also called Un interface in the context of 3GPP LTE standardization and relay node is wirelessly connected to user equipment UE over an access link also called Uu interface in the context of 3GPP LTE standardization.

There are different types of relay operation on the backhaul interface. On the one hand, inband operation consists in that the backhaul link shares the same band as the link used for direct communication between the user equipment UE and the base station eNB. On the other hand, outband operation consists in that the backhaul link operates in a different band that the one used for direct link between the user equipment and the base station.

In the context of the present invention, we will consider only the inband relay operation also called type 1 relaying. More precisely, a type 1 relay node controls a cell which appears to the user equipment as a cell distinct from the donor cell. The relay node has consequently its own physical cell id and transmits its own synchronization channel and reference symbols, as such it appears as a base station eNB to the user equipments.

Prior art documents in the field of relays are 3GPP Standard TR 36.912 v 9.0.0, published on Sept 1, 2009 especially Section 9. or patent application EP 2 053 872 A1.

Due to the fact that for in band relaying, the backhaul link and the access link operate in the same frequency band, the relay transmitter would cause interference on its relay receiver if they are active simultaneously and/or if not sufficient isolation of the incoming and outgoing signals are provided. This self interference issue is especially problematic for random access procedures performed by the relay node.

Except for the initial access of the relay node to the network from the RRC-IDLE state after the initial power up, following situations may trigger a Random Access (RA) procedure at the relay node:
1. DL or UL data arrival during RRC_CONNECTED when UL is unsynchronised.
2. UL data arrival while no dedicated PUCCH resources available for D-SR transmission
3. Handover
4. The maximum number of transmission is reached for the D-SR transmission
5. RRC Connection re-establishment procedure

In general, the Random Access Procedure consists in sending in an uplink channel (Random Access Channel RACH) control information from a user equipment/or relay node to the network. The RACH channel is a contention based channel where several user equipment/relays might access the same resource. The network, then, answers with a random access response which is comprised within a flexible time window configured by the base station and contains at least uplink grant on resources available between the user equipment and the base station so that the user equipment can schedule transmission on the granted uplink resources.

The random access procedure in situations 1 to 5 occurs when the relay node is already operating on the access link. Unfortunately, the usual random access procedure on the backhaul link will interfere with the operation on the access link so that it is necessary for the relay node to stop all communication on the access link interface while performing the random access procedure on the backhaul link.

An illustration of the flow diagram of the currently possible random access procedure by the relay node while in service to user equipment UE already attached to the relay node is illustrated on figure 2.

A step 1 consists in detecting at the relay node RN one of the situations 1) to 5) in which a random access procedure should be triggered

Step 2 consists in stopping all uplink and downlink communication on the access link with user equipments

Step 3 consists in sending a random access preamble on the Random Access Channel

Step 4 consists in receiving from the base station a random access response which is comprised within a flexible time window configured by the base station and contains at least uplink grant on resources available between the user equipment and the base station so that the user equipment can schedule transmission on the granted uplink resources

Step 5 consists in sending a scheduled transmission message on the granted uplink resources

Step 6 consists in a resource configuration message sent to the relay node indicating a new resource configuration valid for the communication on the backhaul link from this time on.

Even if the time of the random access preamble transmission in step 3 is well defined by the random access procedure (PRACH configuration), the relay node should expect the reception of messages 4 and 6 at any time not further precisely defined by the usual random access procedure. Also the relay node should expect to transmit the message 3 at any time on the granted uplink resources. That is why to avoid interference with message 4 and 6 on the access link it is necessary to stop the communication on the access link.

This presents the disadvantage to degrade the end user experience for user equipment connected to the network over the relay node. The user equipment will experience sudden and long interruptions of the service. The duration of the interruption will be equal to the time necessary to configure the stopping of the access link, the time to configure the resuming of the access link and the time necessary to the perform the random access procedure.

A particular object of the present invention is to provide for a solution to reduce the interruption time on the access link while the relay node is to perform a random access procedure on the backhaul link.

Another object of the invention is to provide a relay node and a base station adapted to support such mechanisms.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

These objects presented above, and others that appear below, are achieved in particular by a method for performing a random access procedure by a relay node according to claim 1, a relay node according to claim 9.

According to the present invention, a configuration of the resources for the backhaul link and for the access link is performed before the random access procedure starts so that both are time multiplexed. This configuration of resources makes sure that there is no interference between the access and the backhaul link. Then messages of the random access procedure are sent on resources configured for the backhaul link between the base station and the relay node.

According to the invention, to handle the interference problem the relay node is not communicating with user equipments when it is supposed to receive a random access response from the donor cell.

In a first embodiment, this is realized by creating gaps in the access link during which user equipments are not supposed to expect any relay transmission. These gaps can be created by configuring MBSFN sub-frames for sole use by the relay nodes which the user equipments are not expected to follow.

In a second embodiment, the backhaul link respectively access link configuration which was used before the random access procedure by the relay node continue to be used so that the relay nodes receives the random access procedure messages on the backhaul interface not simultaneously with the operation on the access link.

Either the random access response is sent to the sole relay node which has entered the random access procedure or the random access response is sent to a group of relay nodes all having started the random access procedure.

The method according to the present invention presents the advantage to ensure that the relay node can continue to communicate on the access link without experiencing self interference from the random access procedure until a new configuration of the backhaul link /access link resources is reached at the end of the random access procedure.

Another advantage of the present invention consists in that the relay node stores any data received on the access link from the user equipments and can resume the data transmission/reception over the backhaul link as soon as the random access procedure according to the present invention has been successfully completed. Consequently, the interruption seen by the user equipment connected to the relay node is negligible.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a simplified architecture of a relay-based wireless radio communiation network;
- Fig. 2 shows a prior art random access procedure at a relay node;
- Figure 3 shows a random access procedure according to a first embodiment of the present invention;
- Figure 4 shows the structure of a MBSFN subframe as used in combination with the first embodiment of the present invention.
- Figure 5 shows a random access procedure according to a second embodiment of the present invention;
- Figure 6 shows a random access procedure according to a third embodiment of the present invention;
- Figure 7 shows an embodiment of a relay node according to the present invention;
- Figure 8 shows an embodiment of a base station according to the present invention.

### DETAILED DESCRIPTION OF THE INVENTION

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any boxes shown in the Figures are conceptual only. Their function may be carried out through the operation of program logic, through dedicated logic, through the interaction of program control and dedicated logic, or even manually, the particular technique being selectable by the implementer as more specifically understood from the context.

Figure 1 and figure 2 have been described in connection with prior art.

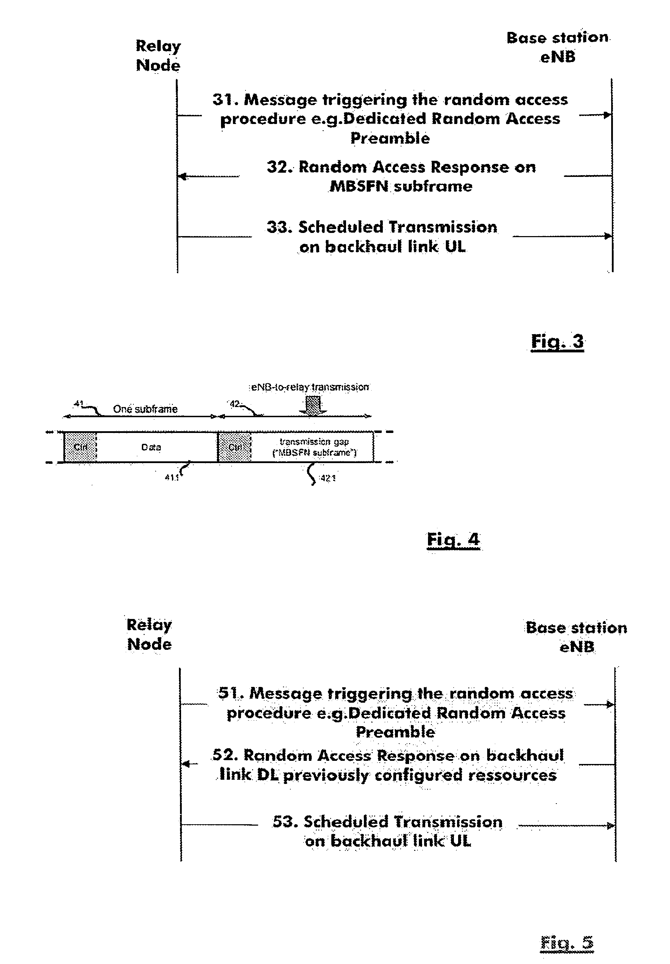

Figure 3 shows a random access procedure according to a first embodiment of the present invention.

Step 31 consists in triggering the random access procedure by the relay node. This triggering is preferably done by sending a random access preamble which is univocally assigned to the relay node on a random access channel at a predefined sub frame of the random access channel defined by PRACH configuration as defined in release 8 random access procedure of 3GPP LTE.

Alternatively, step 31 consists in triggering the random access procedure by the relay node. This triggering is preferably done by sending a random access preamble which is assigned to a group of relay nodes that the relay node belongs to on a random access channel at a predefined sub frame of the random access channel defined by PRACH configuration as defined in release 8 random access procedure of 3GPP LTE.

In a further alternative, step 31 consists in triggering the random access procedure by the relay node. This triggering is preferably done by sending a random access preamble out of a group of random access preambles assigned to a group of relay nodes that the relay node belongs to on a random access channel at a predefined sub frame of the random access channel defined by PRACH configuration as defined in release 8 random access procedure of 3GPP LTE.

Since the relay node has the control over the access link, the relay node can ensure that no data are sent or received over the access link while it intends to send its random access preamble over the backhaul link.

Alternatively, to send the random access preamble, it may be envisaged that the relay node uses a previously configured resource reserved for communication over the backhaul link. The configured resource may be controlled by the base station or alternatively may be determined centrally at an operation and maintenance center and then preferably communicated to both relay node and base station.

This presents the advantage that the relay node entering the random access procedure does not need to perform any change on the configuration of the access link which was previously performed. The previous resource configuration is already foreseen to avoid any collision between the access link communication and the backhaul link communication.

In other contexts, it will be clear for a person skilled in the art that other types of relay node identifiers different from the random access preamble can be exchanged on other types of channel between the relay node and the base station in order to trigger the random access process.

Upon reception of the trigger message, the base station identifies the relay node which has started the random access procedure preferably by mapping the received the random access preamble with the corresponding relay node.

Upon reception of the trigger message, the base station identifies the group which the relay node belongs to where the relay node has started the random access procedure preferably by mapping the received the random access preamble with the corresponding group of relay nodes.

Step 32 consists in sending a random access response from the base station to the relay node.

According to this embodiment of the present invention, a MBSFN sub frame is used to convey the random access response. The MBSFN sub frame is defined so as to contain broadcast multicast information. Some sub frames are reserved in the context of Release 8 3GPP LTE to contain only MBSFN and are consequently only relevant on the backhaul link. These categories of sub frames are not destined to the user equipments. Only the first 2 control symbols of the MBSFN sub frame may be decoded by the user equipments. Consequently, the relay node in control of the configuration of the access link will not schedule any communication on the access link while MBSFN frames are exchanged on the backhaul link. The MBSFN sub-frames are a good example of sub frames fulfilling the condition that no communication takes place on the access link and on the backhaul link simultaneous. This embodiment makes use of already existing sub frames for the sake of an efficient random access procedure.

More precisely, the random access response may be sent on the downlink synchronisation channel (DL-SCH) and transmitted on MBSFN sub frames reserved for relay node(s) operation. This message could be semi-synchronous with the triggering message of step 31. The random access response could be addressed to RA-RNTI (Random Access Radio Network Temporary Identity) on the physical downlink control channel (PDCCH). RA-RNTI is corresponding to the PRACH where the preamble is transmitted; hence it can be received by a group of UE/RN who have transmitted preambles on the corresponding PRACH. A group of relay nodes who have transmitted preambles on the corresponding PRACH can receive the random access response transmitted on MBSFN subframes. Therefore, this method can be used to send the random access response message to a group of RNs. The random access response message would convey at least:
- timing alignment information
- random access-preamble identifier
- UL Grant on backhaul link UL resources of the relay node
- intended for one or multiple relay nodes in one DL-SCH message

Step 33 consists in sending a first scheduled uplink transmission between the relay node and the base station on an uplink resource indicated in the previously received random access response message in step 32. In more details, the first scheduled UL transmission on UL-SCH preferably uses HARQ, the size of the transport blocks depends on the UL grant conveyed in step 32.

For RRC Connection Re-establishment procedure:
- conveys the RRC Connection Re-establishment request generated by the RRC layer and transmitted via CCCH;
- RLC TM: no segmentation
- does not contain any NAS message

For other events it includes an uplink Buffer Status Report when possible and/or cell (specific) radio network temporary identity (C-RNTI) of the relay node.

Figure 4 shows the structure of a MBSFN sub-frame as used in combination with the first embodiment of the present invention. More precisely, it shows a succession of 2 sub-frames 41 and 42. Each sub-frame comprises a control part Ctrl and a data part 411, 421. Sub-frame 41 is a usual sub-frame containing usual user data in data part 411 while sub-frame 42 is a MBSFN sub-frame containing broadcast data in data part 421. According to the present invention, the data part 421 of MBSFN sub-frame 42 is used to convey the random access response message from the base station to the relay node during the random access procedure. The characteristic of the data part of MBSFN sub-frame is that it is not destined to be accessed by any user equipment is it transporting. Such MBSFN sub-frames are preferably reserved in a frame.

Figure 5 shows a random access procedure according to a second embodiment of the present invention.

This random access procedure comprises steps 51, 52, and 53. Step 51 and 53 are identical to steps 31 and 33 already described in relation with figure 3. The difference consists in step 52 where the random access response message is addressed to the relay node cell identity (eg C-RNTI Cell (specific) Radio Network Temporary Identity) and sent on the R-PDCCH of the relay node in a resource configured previously to the entry in the random access procedure as reserved for communication on the backhaul link for the relay node. The configured resource may have been controlled by the base station or alternatively may have been determined centrally at an operation and maintenance center and then preferably communicated to both relay node and base station prior to the entry in the random access procedure.

All other aspects of the random access response as for example the information contained are similar to the one already presented in connection with step 32.

In this embodiment, the random access response is sent individually to each individual relay node which has entered the random access procedure separately.

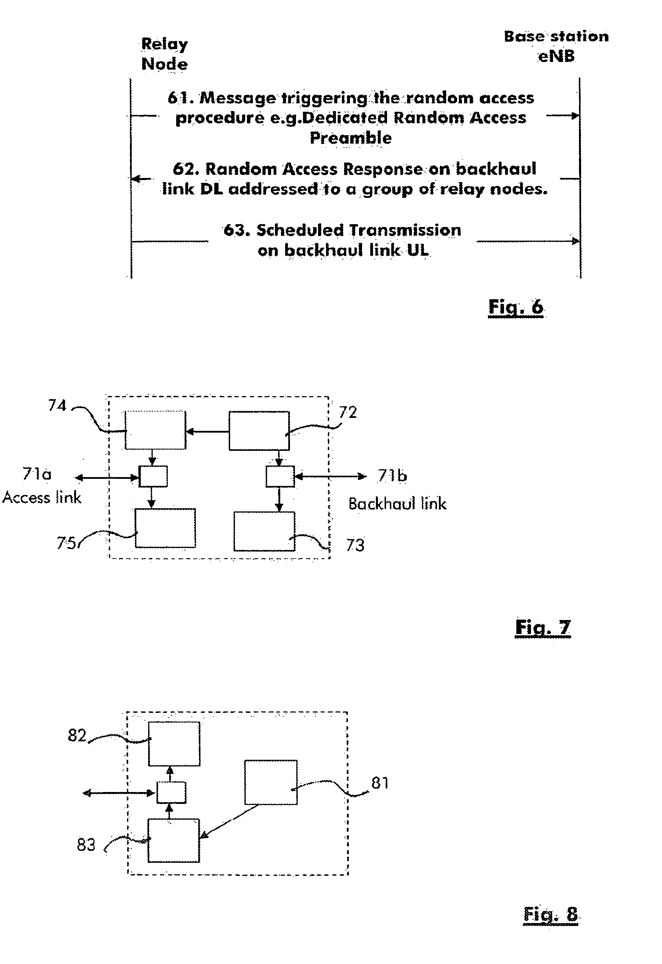

Figure 6 shows a random access procedure according to a third embodiment of the present invention.

This random access procedure comprises steps 61, 62, and 63. Step 61 and 63 are identical to steps 51 and 53 already described in relation with figure 5. The difference between the second and this third embodiment consists in addressing the random access response message to the relay node group identity (eg R-RA-RNTI (Relay Random Access Radio Network Temporary Identity) random access RN-RNTI (Relay Node Radio Network Temporary Identity) for relay nodes) and sending it on the R-PDCCH in a resource configured previously to the entry in the random access procedure as reserved for communication on the backhaul link for a group of relay nodes. The configured resource may have been controlled by the base station or alternatively may have been determined centrally at an operation and maintenance center and then preferably communicated to both relay node and base station.

In this embodiment, the random access response is sent to a group of relay nodes having entered the random access procedure.

This presents the advantage of generating one single message for a whole group of relay nodes all having started the random access procedure. This saves resources used for the random access procedure.

Figure 7 shows an embodiment of a relay node according to the present invention. The relay node comprises an interface 71 b towards the backhaul link to communicate with base stations, and an interface 71 a towards the access link to communicate with user equipments. The relay node comprises a module 72 for detecting the need for triggering a random access while in connected mode on the access link. Events monitored by module 72 are for example:
1. DL or UL data arrival during RRC_CONNECTED when UL is unsynchronised.
2. UL data arrival while no dedicated PUCCH resources available for D-SR transmission
3. Handover
4. The maximum number of transmission is reached for the D-SR transmission
5. RRC Connection re-establishment procedure

Module 72 is further adapted to generate a random access trigger message to be sent on the backhaul link. This trigger message is preferably containing a dedicated random access preamble and sent on the RACH or on a dedicated resource previously allocated to the relay node for communication on the backhaul link.

Module 72 is further adapted to generate a random access trigger message to be sent on the backhaul link. This trigger message is preferably containing a random access preamble out of a pre-assigned group of random access preambles and sent on the RACH or on a dedicated resource previously allocated to the relay node for communication on the backhaul link.

Module 72 is connected to module 74 adapted to control the access interface. Module 74 is only impacted by the present invention when module 72 uses the RACH for transmitting the trigger message. In this case module 74 should configure the access link so as not to get any activity on the access link while transmitting the random access trigger message on the backhaul interface.

Relay node further comprises a module 73 for receiving message of the random access procedure on resources configured for the backhaul link before the random access procedure has started. The configured resource may have been controlled by the base station or alternatively may have been determined centrally at an operation and maintenance center and then preferably communicated to the relay node.

Especially, the random access response of the random access procedure is received by module 73 either as part of a MBSFN sub frame or as a message addressed to the relay node or a group of relay nodes as previously described in connection with the detailed description of 3 embodiments of the method for performing the random access procedure at a relay node.

Relay node further comprises a data storage module 75 for storing data received on the active access link from user equipment and keep them for the duration of the random access procedure on the backhaul link. Data storage module is adapted to forward the stored data upon completion of the random access procedure on the backhaul link.

Figure 8 shows an embodiment of a base station according to the present invention. The base station comprises a module 81 for configuring resources for the backhaul link between the base station and the relay node. This configuration of resources is primarily used when the relay node is in connected mode on the backhaul link and on its access link. Further the base station comprises a module 82 for receiving an indication that a relay node is starting a random access procedure while it is remaining in connected mode on its access link. This indication may be a message containing a dedicated random access preamble. Alternatively, this indication may be a trigger message is preferably containing a random access preamble out of a pre-assigned group of random access preambles and sent on the RACH or on a dedicated resource previously allocated to the relay node for communication on the backhaul link.

Then, the base station comprises a module 83 for sending messages of said random access procedure on resources configured by module 81 for the backhaul link of the relay node. Doing this, the base station ensures that the random access procedure messages will not be colliding with the messages exchanged on the access link of the relay node. Module 83 sends preferably a random access response either as part of the MBSFN sub frame or on a relay node specific allocated resource on the backhaul link specifically addressed to the relay node or addressed to a group of relay nodes as already described in combination with the method for performing random access procedure at a relay node.

## Claims

1. Method for performing a random access procedure by a relay node (RN) operating in inband relaying mode in a wireless or radio communication network, comprising at least one base station (eNB) adapted to communicate over a backhaul link (Un) with at least one relay node (RN), said relay node (RN) being adapted to communicate over an access link (Uu) with at least one user equipment (UE), said method comprising the steps of:
- Configuring resources for said backhaul link (Un) and for said access link (Uu) to be time-multiplexed at said relay node,
said method being **characterized in that** it further comprises the steps of:
- Sending messages (32) of said random access procedure on resources configured for said backhaul link (Un)
- continuing communication on said access link (Uu) between said relay node (RN) and said user equipment (UE) while performing said random access procedure on said backhaul link (Un).

2. Method according to claim 1, wherein a random access response (32) of said random access procedure is sent from said base station (eNB) to said relay node (RN) in a MBSFN reserved sub-frame (421) on said backhaul link (Un), said relay node (RN) configuring resources on said access link (Uu) to be time multiplexed with said MBSFN reserved sub-frame (421).

3. Method according to claim 1, wherein a random access response (52) of said random access procedure is sent only to said relay node (RN) having started said random access procedure on a resources configured in previous operation by said base station (eNB) for said backhaul link (Un) of said relay node.

4. Method according to claim 1, wherein a random access response (62) of said random access procedure is sent to a group of relay nodes comprising said relay node (RN) having started said random access procedure on a resource configured in previous operation by said base station (eNB) for said backhaul link of said group of relay nodes.

5. Method according to claim 1, further comprising the steps of:
- allocating to said relay node (RN) a random access channel resource comprising a random access preamble univocally identifying said relay node;
- sending said random access preamble identifying said relay node starting said random access procedure to said base station (eNB) on a random access channel; and
- performing an identification of said relay node (RN) at said base station (eNB).

6. Method according to claim 5, wherein a group of relay nodes are identified by a random access preamble or a group of random access preambles.

7. Method according to claim 1, wherein said configuration of resources for said backhaul link is performed by said base station (eNB).

8. Method according to claim 1, wherein said configuration of resources for said backhaul link is performed by an operation and maintenance center.

9. Relay node (RN) adapted to be used in a wireless or radio communication network, said relay node (RN) being adapted to communicate over a backhaul link (Un) towards at least one base station (eNB) and over an access link (Uu) towards at least one user equipment (UE), said relay node (RN) operating in inband relaying mode, said relay node being **characterized in that** it comprises:
- means for starting a random access procedure while in connected mode communication on the access link (Uu);
- means for receiving messages of said random access procedure on resources configured for said backhaul link (Un) while continuing connected mode communication on said access link (Uu).

10. Relay node (RN) according to claim 9, wherein
- said means for starting a random access procedure in connected mode on said access link comprises means for sending a random access preamble in a random access channel on a backhaul link while continuing connected mode communication on said access link.

11. Relay node (RN) according to claim 9, wherein said relay node has control of the access link for said user equipment connected to the relay node.

12. Relay node (RN) according to claim 9, further comprising means to store data received from said user equipment (UE) over the access link (Uu) while said relay node (RN) is performing the random access procedure and means for sending said stored data upon completion of said random access procedure over said backhoul link (Un).

## Patentansprüche

1. Verfahren zur Durchführung einer Direktzugriffsprozedur durch einen im Inband-Weiterleitungsmodus betriebenen Relaisknoten (RN) in einem Drahtlos- oder Funkkommunikationsnetzwerk mit mindestens einer für die Kommunikation, über eine Backhaul-Verbindung (Un), mit mindestens einem Relaisknoten (RN) ausgelegten Basisstation (eNB), wobei der besagte Relaisknoten (RN) für die Kommunikation, über eine Zugangsverbindung (Uu), mit mindestens einem Benutzerendgerät (UE) ausgelegt ist, wobei das besagte Verfahren die folgenden Schritte umfasst:
- Konfigurieren von Ressourcen für die besagte Backhaul-Verbindung (Un) und für die an dem besagten Relaisknoten zeitlich zu multiplexende Zugangsverbindung,
wobei das besagte Verfahren **dadurch gekennzeichnet ist, dass** es weiterhin die folgenden Schritte umfasst:
- Senden von Nachrichten (32) der besagten Direktzugriffsprozedur auf Ressourcen, die für die besagte Backhaul-Verbindung (Un) konfiguriert sind,
- Fortsetzen der Kommunikation auf der besagten Zugangsverbindung (Uu) zwischen dem besagten Relaisknoten (RN) und dem besagten Benutzerendgerät (RE) während der Durchführung der besagten Direktzugriffsprozedur auf der besagten Backhaul-Verbindung (Un).

2. Verfahren nach Anspruch 1, wobei eine Direktzugriffsantwort (32) der besagten Direktzugriffsprozedur in einem reservierten MBSFN-Teilrahmen (421) auf der besagten Backhaul-Verbindung (Un) von der besagten Basisstation (eNB) an den besagten Relaisknoten (RN) gesendet wird, wobei der besagte Relaisknoten (RN) Ressourcen auf der besagten Zugangsverbindung (Uu), die mit dem besagten reservierten MBSFN-Teilrahmen (421) zeitlich gemultiplext werden sollen, konfiguriert.

3. Verfahren nach Anspruch 1, wobei eine Direktzugriffsantwort (52) der besagten Direktzugriffsprozedur nur an den besagten Relaisknoten (RN), der die besagte Direktzugriffsprozedur auf Ressourcen, die während des vorherigen Schritts durch die besagte Basisstation (eNB) für die besagte Backhaul-Verbindung (Un) des besagten Relaisknotens konfiguriert worden sind, gestartet hat, gesendet wird.

4. Verfahren nach Anspruch 1, wobei eine Direktzugriffsantwort (62) der besagten Direktzugriffsprozedur an eine Gruppe von Relaisknoten, einschließlich des besagten Relaisknotens (RN), der die besagte Direktzugriffsprozedur gestartet hat, auf einer in einem vorherigen Schritt von der besagten Basisstation (eNB) für die besagte Backhaul-Verbindung der besagten Gruppe von Relaisknoten konfigurierten Ressource gesendet wird.

5. Verfahren nach Anspruch 1, weiterhin die folgenden Schritte umfassend:
- Zuweisen, an den besagten Relaisknoten (RN), einer Direktzugriffskanalressource mit einer Direktzugriffspräambel, welche den besagten Relaisknoten eindeutig identifiziert;
- Senden der besagten Direktzugriffspräambel, welche den besagten Relaisknoten, der die besagte Direktzugriffsprozedur startet, identifiziert, auf einem Direktzugriffskanal an die besagte Basisstation (eNB); und
- Durchführen einer Identifikation des besagten Relaisknotens (RN) an der besagten Basisstation (eNB).

6. Verfahren nach Anspruch 5, wobei eine Gruppe von Relaisknoten anhand einer Direktzugriffspräambel oder einer Gruppe von Direktzugriffspräambeln identifiziert wird.

7. Verfahren nach Anspruch 1, wobei die besagte Konfiguration von Ressourcen für die besagte Backhaul-Verbindung durch die besagte Basisstation (eNB) durchgeführt wird.

8. Verfahren nach Anspruch 1, wobei die besagte Konfiguration von Ressourcen für die besagte Backhaul-Verbindung durch ein Betriebs- und Wartungszentrum durchgeführt wird.

9. Relaisknoten (RN) für die Verwendung in einem Drahtlos- oder Funkkommunikationsnetzwerk, wobei der besagte Relaisknoten (RN) für die Kommunikation über eine Backhaul-Verbindung (Un) zu mindestens einer Basisstation (eNB) und über eine Zugangsverbindung (Uu) zu mindestens einem Benutzerendgerät (UE) ausgelegt ist, wobei der besagte Relaisknoten (RN) im Inband-Weiterleitungsmodus betrieben wird, wobei der besagte Relaisknoten **dadurch gekennzeichnet ist, dass** er umfasst:
- Mittel zum Starten einer Direktzugriffsprozedur, während er sich im Zustand einer Kommunikationsverbindung auf der Zugangsverbindung (Uu) befindet;
- Mittel zum Empfangen von Nachrichten der besagten Direktzugriffsprozedur auf Ressourcen, die für die besagte Backhaul-Verbindung (Un) konfiguriert sind, während die Kommunikationsverbindung auf der besagten Zugangsverbindung (Uu) fortgesetzt wird.

10. Relaisknoten (RN) nach Anspruch 9, wobei
- die besagten Mittel zum Starten einer Direktzugriffsprozedur im Zustand einer Kommunikationsverbindung auf der besagten Zugangsverbindung Mittel zum Senden einer Direktzugriffspräambel in einem Direktzugriffskanal auf einer Backhaul-Verbindung, während die Kommunikationsverbindung auf der besagten Zugangsverbindung fortgesetzt wird, umfassen.

11. Relaisknoten (RN) nach Anspruch 9, wobei der besagte Relaisknoten die Zugangsverbindung für das besagte an den Relaisknoten angeschlossene Benutzerendgerät steuert.

12. Relaisknoten (RN) nach Anspruch 9, weiterhin umfassend Mittel zum Speichern von von dem besagten Benutzerendgerät (UE) über die Zugangsverbindung (Uu) empfangenen Daten, während der besagte Relaisknoten (RN) die Direktzugriffsprozedur durchführt, und Mittel zum Senden der besagten gespeicherten Daten nach Beenden der besagten Direktzugriffsprozedur über die besagte Backhaul-Verbindung (Un).

## Revendications

1. Procédé de réalisation d'une procédure d'accès aléatoire par un noeud relais (RN) fonctionnant en mode de relais intrabande dans un réseau de communication sans fil ou radio, comprenant au moins une station de base (eNB) adaptée pour communiquer sur une liaison terrestre (Un) avec au moins un noeud relais (RN), ledit noeud relais (RN) étant adapté pour communiquer sur une liaison d'accès (Uu) avec au moins un équipement utilisateur (UE), ledit procédé comprenant les étapes suivantes :
- configurer des ressources pour ladite liaison terrestre (Un) et pour ladite liaison d'accès (Uu) devant être multiplexées dans le temps au niveau dudit noeud relais, ledit procédé étant **caractérisé en ce qu'**il comprend en outre les étapes suivantes :
- envoyer des messages (32) de ladite procédure d'accès aléatoire sur des ressources configurées pour ladite liaison terrestre (Un)
- poursuivre la communication sur ladite liaison d'accès (Uu) entre ledit noeud relais (RN) et ledit équipement utilisateur (UE) tout en réalisant ladite procédure d'accès aléatoire sur ladite liaison terrestre (Un).

2. Procédé selon la revendication 1, dans lequel une réponse d'accès aléatoire (32) de ladite procédure d'accès aléatoire est envoyée depuis ladite station de base (eNB) vers ledit noeud relais (RN) dans une sous-trame réservée MBSFN (421) sur ladite liaison terrestre (Un), ledit noeud relais (RN) configurant des ressources sur ladite liaison d'accès (Uu) devant être multiplexée dans le temps avec ladite sous-trame réservée MBSFN (421).

3. Procédé selon la revendication 1, dans lequel une réponse d'accès aléatoire (52) de ladite procédure d'accès aléatoire est envoyée uniquement audit noeud relais (RN) ayant lancé ladite procédure d'accès aléatoire sur une ressource configurée dans une opération précédente par ladite station de base (eNB) pour ladite liaison terrestre (Un) dudit noeud relais.

4. Procédé selon la revendication 1, dans lequel une réponse d'accès aléatoire (62) de ladite procédure d'accès aléatoire est envoyée à un groupe de noeuds relais comprenant ledit noeud relais (RN) ayant lancé ladite procédure d'accès aléatoire sur une ressource configurée dans une opération précédente par ladite station de base (eNB) pour ladite liaison terrestre dudit groupe de noeuds relais.

5. Procédé selon la revendication 1, comprenant en outre les étapes suivantes :
- attribuer audit noeud relais (RN) une ressource de canal d'accès aléatoire comprenant un préambule d'accès aléatoire identifiant de manière univoque ledit noeud relais ;
- envoyer ledit préambule d'accès aléatoire identifiant ledit noeud relais lançant ladite procédure d'accès aléatoire à ladite station de base (eNB) sur un canal d'accès aléatoire ; et
- réaliser une identification dudit noeud relais (RN) au niveau de ladite station de base (eNB).

6. Procédé selon la revendication 5, dans lequel un groupe de noeuds relais est identifié par un préambule d'accès aléatoire ou un groupe de préambules d'accès aléatoire.

7. Procédé selon la revendication 1, dans lequel ladite configuration de ressources pour ladite liaison terrestre est réalisée par ladite station de base (eNB).

8. Procédé selon la revendication 1, dans lequel ladite configuration de ressources pour ladite liaison terrestre est réalisée par un centre d'exploitation et de maintenance.

9. Noeud relais (RN) adapté pour être utilisé dans un réseau de communication sans fil ou radio, ledit noeud relais (RN) étant adapté pour communiquer sur une liaison terrestre (Un) avec au moins une station de base (eNB) et sur une liaison d'accès (Uu) avec au moins un équipement utilisateur (UE), ledit noeud relais (RN) fonctionnant en mode de relais intrabande, ledit noeud relais étant **caractérisé en ce qu'**il comprend :
- moyens pour lancer une procédure d'accès aléatoire pendant une communication en mode connecté sur la liaison d'accès (Uu) ;
- moyens pour recevoir des messages de ladite procédure d'accès aléatoire sur des ressources configurées pour ladite liaison terrestre (Un) tout en poursuivant la communication en mode connecté sur ladite liaison d'accès (Uu).

10. Noeud relais (RN) selon la revendication 9, dans lequel
- lesdits moyens pour lancer une procédure d'accès aléatoire en mode connecté sur ladite liaison d'accès comprennent des moyens pour envoyer un préambule d'accès aléatoire dans un canal d'accès aléatoire sur une liaison terrestre tout en poursuivant la communication en mode connecté sur ladite liaison d'accès.

11. Noeud relais (RN) selon la revendication 9, dans lequel ledit noeud relais contrôle la liaison d'accès pour ledit équipement utilisateur connecté au noeud relais.

12. Noeud relais (RN) selon la revendication 9, comprenant en outre des moyens pour stocker des données provenant dudit équipement utilisateur (UE) sur la liaison d'accès (Uu) alors que ledit noeud relais (RN) réalise la procédure d'accès aléatoire et des moyens pour envoyer lesdites données stockées une fois ladite procédure d'accès aléatoire sur ladite liaison terrestre (Un) terminée.
